# EUROPEAN PATENT APPLICATION

(11) **EP 1 911 959 A1**
(43) Date of publication of application: **16.04.2008**
(21) Application number: 06122249.3
(22) Date of filing: 13.10.2006
(51) Int. Cl.: F02M 25/08

(54) **Vapour entrapment canister arrangement**

(71) Applicant: Delphi Technologies, Inc., Troy, MI 48007 (US)
(72) Inventor: Loevenbruck, Remi, 6720 Habay La Neuve (LU); De Biasio, Ennio, 4926 Bascaharage (LU)
(74) Representative: Jones, Keith William

(57) **Abstract**

A vapour entrapment canister arrangement (300, 400 500) comprises plurality of interconnected vapour entrapment canisters (100, 200). The canisters (100, 200) being connected such that the outlet of one canister (100, 200) feeds into the inlet of another canister (100, 200) to provide effectively a larger vapour entrapment canister.

## Description

The present invention relates to a vapour canister arrangement. More particularly, but not exclusively, it relates to a vapour canister arrangement which efficiently occupies a cavity within in a vehicle.

Vehicle fuel systems often emit hydrocarbon fuel vapours which can be toxic and harmful to the environment. Typically, these emissions of hydrocarbon vapours occur during fuel storage and delivery.

Vehicle fuel systems are often equipped with evaporative emission control systems reduce the emission of vapours from the vehicle fuel system to assist in complying with hydrocarbon emission limits. Typically, such control systems comprise a vapour entrapment canister arranged to trap hydrocarbon vapour before it can enter the environment.

Generally, current vapour entrapment canisters are square or rectangular in shape. The conformation of such canisters is dependent upon the other components of the engine or fuel system around which the vapour entrapment canister must fit.

Normally, a different shape of vapour entrapment canister must be designed and manufactured for each engine or fuel system, with the associated re-tooling costs and tool downtime. This also results in poor fitting of "regular" canisters into engine compartments. The requirement to manufacture individual canisters leads to a large inventory which requires storage space.

According to a first aspect of the present invention there is provided a vapour entrapment canister arrangement comprising a plurality of vapour transport canisters, each canister comprising a chamber, and an inlet port and an outlet port, the inlet port of a first of said plurality of canisters being arranged to receive vapour from a source, said vapour passing through the chamber of said first of said plurality of canisters to the outlet port thereof, the inlet port of a second of said plurality of canisters being in communication with said outlet port of said first of said plurality of canisters such that the inlet port of said second of said plurality of canisters is arranged to receive vapour output from the outlet port of said first of said plurality of canisters.

Such an arrangement of multiple vapour entrapment canisters allows a composite vapour entrapment canister assembly to be constructed that has a variable shape and configuration. An arrangement having a variable shape and configuration allows the efficient filling of space within an engine cavity.

Such a canister results in a substantially uniform flow of vapour in between the diffuser and the chamber's periphery, or vice versa if the direction of flow is reversed.

At least one of the chambers of the plurality of canisters may be spherical. Alternatively, or additionally, at least one of the chambers of the plurality of canisters may be conical.

The provision of a "standardised" canister conformation reduces the cost of production of vapour entrapment canisters compared to the prior art. Such an arrangement necessitates the production of only a limited number of mass produced elements.

At least one of the chambers of the plurality of canisters may contain an adsorbent material arranged to adsorb vapour, for example hydrocarbon vapour. The adsorbent material may comprise activated carbon.

The outlet port may be opposed to the inlet port. Alternatively, the outlet port may be inclined with respect to the inlet port. The outlet port may be perpendicular to the inlet port.

Such freedom in the definition of the relative alignment of the inlet and outlet ports allows the interconnection of canisters to produce an arrangement that is tailored to fill a space efficiently.

According to a second aspect of the present invention there is provided a vapour canister arrangement kit comprising a plurality of vapour canisters sub-assembly units, each unit being connectable to another unit to provide an arrangement according to the first aspect of the present invention.

The invention will now be described, by way of example only, with reference to the accompanying drawings, in which:
Figures 1 a and 1 b are perspective view of embodiments of a first sub-assembly unit of a vapour entrapment canister assembly according to an aspect of the present invention;
Figure 2 is perspective view of a second embodiment of a sub-assembly unit of a vapour entrapment canister assembly according to an aspect of the present invention;
Figure 3 is a perspective view of a first embodiment of a vapour entrapment canister arrangement according to an aspect of the present invention;
Figure 4 is a plan view of a second embodiment of a vapour entrapment canister arrangement according to an aspect of the present invention; and
Figure 5 is a plan view of a third embodiment of a vapour entrapment canister arrangement according to an aspect of the present invention.

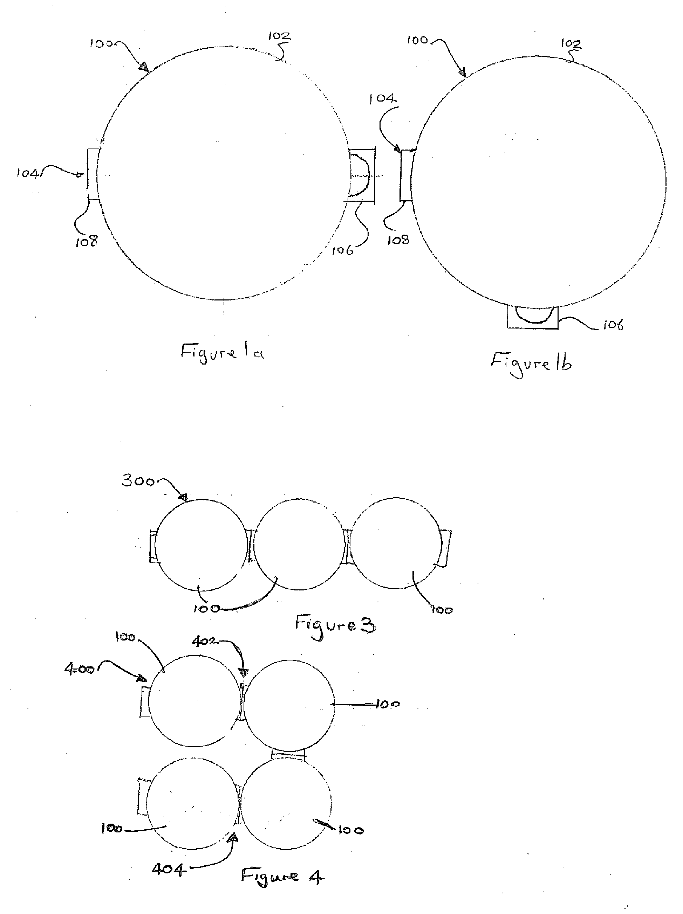

Referring now to Figures 1 a and 1b, a vapour canister 100 comprises a spherical chamber 102 having an inlet 104 and an outlet 106. A tip (not shown) of the inlet 104 is located at a central point in the chamber 102:

The inlet 104 may be opposed to the outlet 106, see for example Figure 1 a, or they may be inclined with respect to one another, see for example Figure 1 b. Typically, the angle of inclination of the inlet 104 to the outlet 106 is 90°, although any suitable angle is possible.

Typically, a mesh screen is mounted concentrically within the chamber 102 spaced apart from the chamber's inner wall.

Usually, the interior space defined by the screen is filled with activated carbon. As the hydrocarbon vapour passes radially outward towards the mesh from the inlet tip the activated carbon adsorbs the hydrocarbon vapour.

A concentration gradient of hydrocarbon vapour is established between the inlet 104 and the outlet 106. The concentration of hydrocarbon vapours being higher at the inlet 104 than at the outlet 106.

In the present embodiment, the inlet 104 comprises a collar 108 having an internal diameter approximately equal to that of the outlet 106. This allows a friction fit to be established between the outlet 106 of a first canister 100 and the inlet of a second canister 100.

It is envisaged that the collar 108 need not be present and that first and second canisters may be joined be welding. Alternatively, the first and second canisters may be placed in communication by means of hosing, or a pipe. In this embodiment standard clips or clamps would used to fasten the hosing, or pipe to the inlet 104 and outlet 106.

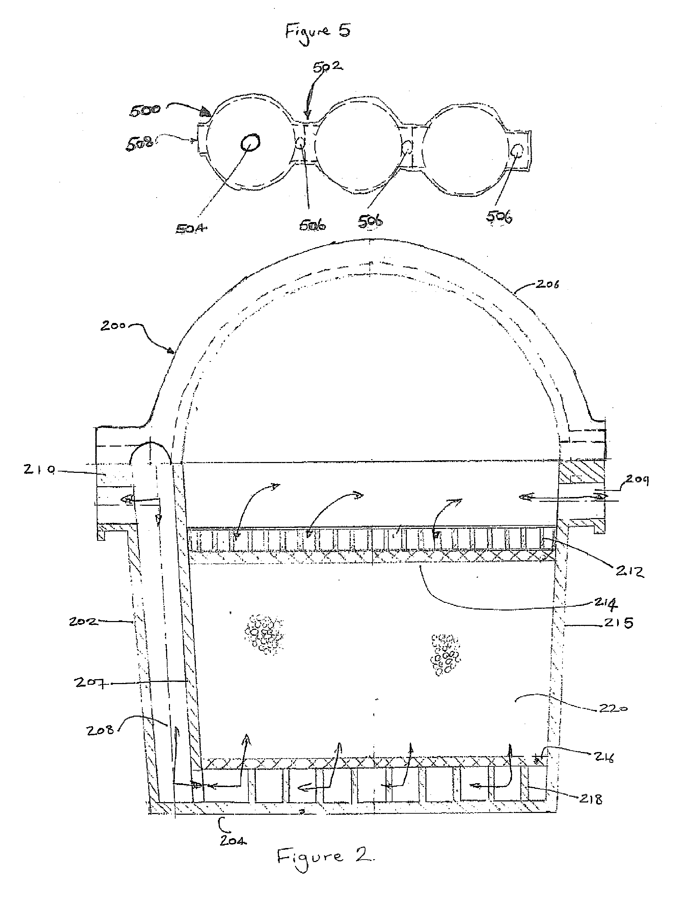

Referring now to Figure 2, a vapour canister 200 comprises a hollow tapered cylindrical body portion 202. The body portion 202 is sealed at either end by respective end walls 204, 206. An internal wall 207 spaced close to the body portion 202 extends from the wide end wall 204 to close to the narrow end wall 206. The internal wall 207 and the body portion 202 define a channel 208 therebetween.

The canister 200 comprises an inlet 209 and an outlet 210 circumfentially opposing each other, adjacent the wide end wall 204 of the body portion 202. The outlet 210 is located externally of the internal wall 207.

A grid 212 backed by a mesh screen 214 extends between the internal wall 207 and the remote wall 215 of the body portion 202 between the inlet 209 and the narrow end wall 206 adjacent the inlet 209.

A further mesh screen 216 sits upon a plurality spaced apart pillars 218 that project from the narrow end wall 206 of the body portion 202.

The chamber 220 defined between the mesh screens 214, 216 is filled with an adsorbent material, typically activated charcoal.

Referring now to Figures 1a, 1 b and 3, a linear canister assembly 300 comprises canisters 100 with opposing inlets and outlets welded together inlet to outlet.

Referring now to Figures 1 a, 1 b, and 4 an a U-shaped assembly 400 comprises a canister 100 having an opposing inlet pair welded to a canister 100 having an inclined inlet outlet pair, inclined at right angles to each other as a first leg 402 of the U shaped assembly 400. A second leg 404 of the U shaped assembly 400 mirrors the first leg 402. The outlet of the right angled canister 100 forming part of the first leg 402 is welded to the inlet of the right angled canister 100 forming part of the second leg 404.

Referring now to Figures 1 a and 5, a liner canister arrangement 500 is comprises canisters 100 and a cover 502. The cover 502 may have a purge connector 504 and a tap 506 located along its length. The purge connector 504 allows the ingress of a flow of air into the arrangement 500 to purge the adsorbent material within the arrangement of fuel vapours. Typically, the purge connector 504 is located in the canister 100 opposed to inlet 508 of the canister arrangement 500.

It will be appreciated that although described with reference to the canister sub-assembly unit of Figure 1 the assemblies of Figures 3 to 5 may comprise sub-assembly units as described with reference to Figure 2 hereinbefore.

It will be further appreciated that a desired conformation of canister assembly can be realised by the use of canister sub-assembly units having appropriate relatively inclined inlet and outlet ports.

It will be appreciated that although described with reference to a spherical canister or a tapered canister any convenient shape of canister, for example cubic or ovoid, may be used if appropriate to the space filling requirements.

Various modifications and improvements may be made to the above without departing from the scope of the present invention.

## Claims

1. A canister assembly (300,400,500) **characterised by** a plurality of vapour entrapment canisters (100,200), each canister (100,200) comprising a chamber (102,220), and an inlet port (104,209) and an outlet port (106, 210) wherein vapour can flow therebetween, the outlet port (106, 210) of a first vapour entrapment canister (100,200) is in fluid communication with the inlet port (104,209) of a second vapour entrapment canister(100, 200).

2. A canister assembly according to claim 1 further **characterised in that** the at least one of the canisters (100) comprises a spherical chamber (102).

3. A canister assembly according to claim 2 further **characterised in that** the at least one of the canisters (200) comprises a conical, or a frusto-conical chamber (220).

4. A canister assembly according to any preceding claim further **characterised in that** the outlet port (106,210) of at least one of the canisters (100,200) is opposed to its inlet port (104,209).

5. A canister assembly according to any preceding claim further **characterised in that** the outlet port (106,210) of at least one of the canisters is inclined with respect to the inlet port (104,209).

6. A canister assembly according to any preceding claim further **characterised in that** the first and second vapour entrapment canisters (100,200) are in direct fluid communication directly.

7. A canister assembly according to any preceding claim further **characterised in that** the first and second vapour entrapment canisters (100,200) are in fluid communication via an intermediate connecting channel.

8. A canister assembly according to any preceding claim further **characterised in that** the chamber (102,220) contains an adsorbent material arranged to adsorb hydrocarbon vapour.

9. A canister assembly according to claim 8 further **characterised in that** the adsorbent material comprises activated carbon.

10. A vapour canister assembly kit comprising a plurality of vapour entrapment canisters (100,200) arrangeable to form a vapour canister assembly according to any one of claims 1 to 9.
